(19) Europäisches Patentamt
European Patent Office
Office européen des brevets

(11) EP 2 655 269 B1

(12) FASCICULE DE BREVET EUROPEEN

(45) Date de publication et mention de la délivrance du brevet:
08.08.2018 Bulletin 2018/32

(51) Int Cl.:
C02F 3/30 (2006.01)     C02F 3/26 (2006.01)
C02F 3/12 (2006.01)     C02F 3/20 (2006.01)
C02F 101/16 (2006.01)

(21) Numéro de dépôt: 11807933.4

(22) Date de dépôt: 23.12.2011

(86) Numéro de dépôt international:
PCT/EP2011/074008

(87) Numéro de publication internationale:
WO 2012/085288 (28.06.2012 Gazette 2012/26)

(54) **PROCÉDÉ ET INSTALLATION DE TRAITEMENT D'EAU PAR NITRITATION - DÉNITRITATION COMPRENANT AU MOINS UNE ÉTAPE AÉRÉE ET UNE ÉTAPE DE CONTRÔLE DE L'APPORT EN OXYGENE AU COURS DE L'ÉTAPE AÉRÉE**

VERFAHREN ZUR WASSERBEHANDLUNG DURCH NITRITATION UND DENITRITATION UMFASSEND WENIGSTENS EINEN BELÜFTUNGSSCHRITT SOWIE WENIGSTENS EINEN SCHRITT DER KONTROLLE DER ZUGABE VON SAUERSTOFF WÄHREND DES BELÜFTUNGSSCHRITTES

PROCESS AND APPARATUS FOR TREATING WATER BY MEANS OF NITRITATION AND DENITRITATION COMPRISING AT LEAST ONE AERATING STEP AND AT LEAST ONE STEP OF CONTROLLING THE ADDITION OF OXYGEN DURING THE AERATING STEP

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 24.12.2010 FR 1061255

(43) Date de publication de la demande:
30.10.2013 Bulletin 2013/44

(73) Titulaire: Veolia Water Solutions & Technologies Support
94417 Saint-Maurice Cedex (FR)

(72) Inventeurs:
• LEMAIRE, Romain
  F-75017 Paris (FR)
• DANIEL, Olivier
  F-77185 Lognes (FR)

(74) Mandataire: Vidon Brevets & Stratégie
16B, rue de Jouanet
BP 90333
35703 Rennes Cedex 7 (FR)

(56) Documents cités:
EP-A1- 1 721 870     EP-A1- 2 377 819
WO-A1-2010/074008   WO-A1-2010/106487
JP-A- 2003 088 889   US-A1- 2006 131 232
US-B1- 7 153 429

• U Meyer ET AL: "Fuzzy-control for improved nitrogen removal and energy saving in WWT-plants with pre-denitrification", Water Science and Technology, 31 décembre 2003 (2003-12-31), pages 69-76, XP055005087, Extrait de l'Internet:
URL:http://www.iwaponline.com/wst/04711/0069/047110069.pdf [extrait le 2011-08-17]
• DATABASE WPI Week 201116 Thomson Scientific, London, GB; AN 2010-Q15588 XP002657191, -& CN 101 880 111 A (UNIV BEIJING TECHNOLOGY) 10 novembre 2010 (2010-11-10)

**Description**

## 1. Domaine de l'invention

Le domaine de l'invention est celui du traitement d'eaux chargées en azote sous forme d'ammonium. L'invention trouve notamment son application dans le traitement d'effluents industriels ou municipaux tels que les surnageants de digesteurs anaérobies, les effluents issus du traitement des boues par oxydation par voie humide, les condensats de traitement de gaz, les condensats de traitement de boues d'épuration, les lixiviats de décharges, les effluents d'abattoir, les lisiers de porcs ou tout autre type d'effluent chargé en azote sous forme d'ammonium.

Plus précisément, l'invention concerne un procédé de traitement d'eau mettant en oeuvre un réacteur biologique à l'intérieur duquel est notamment mise en oeuvre au moins une étape de traitement biologique aérée.

## 2. Art antérieur

Les procédés biologiques de traitement d'eau sont couramment mis en oeuvre afin d'abattre la teneur en pollution azotée des eaux.

Au rang de ces procédés biologiques figure le procédé de nitrification-dénitrification qui peut être mis en oeuvre de manière continue ou séquencée.

Un tel procédé consiste à introduire une eau à traiter dans un réacteur biologique à l'intérieur duquel sont mises en oeuvre des phases aérées et des phases anoxiques.

Au cours des phases aérées, l'injection d'oxygène (sous forme d'air ou d'oxygène pur par exemple) dans le réacteur promeut le développement d'une biomasse nitrifiante autotrophe permettant la transformation de l'azote sous forme d'ammonium ($NH_4^+$) en nitrates ($NO_3^-$) constituée en fait d'une biomasse transformant l'azote sous forme d'ammonium ($NH_4^+$) en nitrites ($NO_2^-$) dite biomasse AOB («*ammonia oxidising bacteria»)* et d'une biomasse transformant les nitrites ($NO_2^-$) en nitrates ($NO_3^-$), dite biomasse NOB («*nitrite oxidising bacteria»*).

Au cours des phases anoxiques, l'arrêt de l'aération du réacteur promeut le développement d'une biomasse dénitrifiante qui réduit les nitrates en azote gazeux moléculaire (diazote) $N_2$ en passant par le stade nitrites. Cette biomasse dénitrifiante est de nature hétérotrophe, c'est-à-dire qu'elle ne peut se développer qu'en présence d'une source de carbone organique.

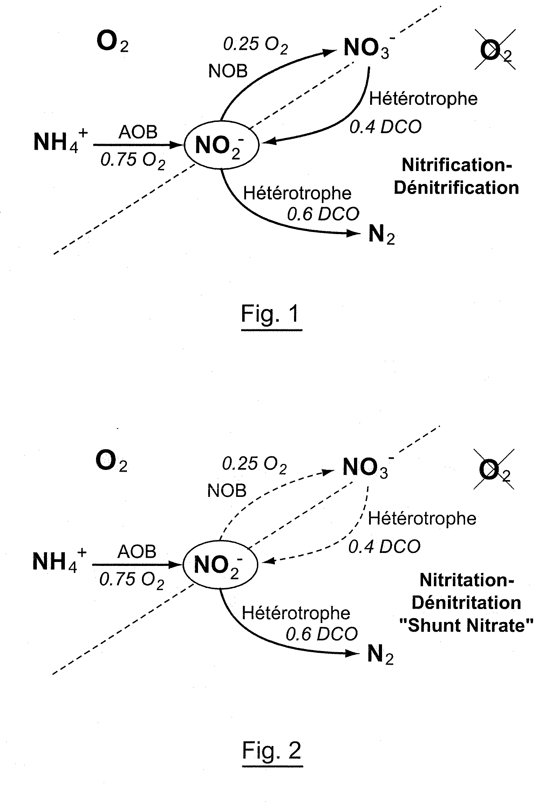

Ce procédé d'abattement de la pollution azotée par nitrification-dénitrification est représenté de façon schématique à la figure 1.

Un tel procédé de traitement biologique est particulièrement efficace du fait que sa mise en oeuvre conduit à abattre, de manière non négligeable, la teneur en pollution azotée de l'eau. Il présente toutefois quelques inconvénients. Notamment, sa mise en oeuvre requiert d'injecter dans le réacteur une quantité relativement importante d'oxygène pour assurer la transformation de l'ammonium en nitrates. En outre, la plupart des eaux à traiter ont une teneur en pollution organique (DBO, Demande Biochimique en Oxygène) trop faible pour permettre d'abattre de manière satisfaisante la pollution azotée par nitrification-dénitrification. Il est ainsi souvent nécessaire d'injecter du carbone dans le réacteur sous forme de réactifs (par exemple un substrat carboné facilement biodégradable) de manière à ce que les bactéries de type hétérotrophe puissent assurer l'élimination des nitrates en quantité satisfaisante.

Un tel procédé de traitement par nitrification-dénitrification est ainsi relativement coûteux à mettre en oeuvre du fait de la consommation assez importante en oxygène et en réactif carboné qu'elle implique.

Afin de pallier au moins en partie ces inconvénients, un procédé a été développé visant à abattre la pollution sous forme d'ammonium en minimisant la formation de nitrates. Ce procédé dit de nitritation-dénitritation également appelé « shunt des nitrates » consiste à introduire une eau à traiter dans un réacteur biologique séquentiel à l'intérieur duquel sont mises en oeuvre des phases aérées et des phases anoxiques sous des conditions opérationnelles assurant une pression sélective pour le développement des bactéries AOB au détriment des bactéries NOB. Ces conditions opérationnelles peuvent être une concentration élevée en ammonium ($NH4^+$), une faible concentration en oxygène dissous durant les phases aérées, une température supérieure à 28°C, un faible âge de boues ou plusieurs conditions opérationnelles combinées.

Au cours des phases aérées, l'injection d'oxygène dans le réacteur permet le développement de bactéries de type AOB qui agissent sur l'azote ammoniacal ($NH4^+$) pour former des nitrites ($NO_2^-$). L'utilisation d'un réacteur biologique séquentiel, pour la mise en oeuvre d'un procédé de type « shunt des nitrates », permet d'obtenir de fortes concentrations en ammonium après chaque séquence d'alimentation de l'eau à traiter dans le réacteur. Les bactéries NOB étant plus inhibées par les fortes concentrations en ammonium que les bactéries AOB, leur développement est ainsi limité. D'autre part, l'oxygène est injecté de façon à maintenir de préférence une faible concentration en oxygène dissous dans le réacteur, afin de favoriser le développement des bactéries AOB au détriment des bactéries NOB du fait d'une meilleure affinité pour l'oxygène des bactéries AOB. La production de nitrates à partir des nitrites par la biomasse NOB se trouve ainsi limitée.

Au cours des phases anoxiques, la biomasse hétérotrophe est essentiellement dévolue à la transformation des nitrites en azote moléculaire, la teneur en nitrates étant faible. Cette biomasse hétérotrophe se trouve en concurrence avec la biomasse NOB pour la consommation des nitrites et contribue à limiter la croissance de cette dernière.

Ce procédé d'abattement de la pollution azotée par « shunt des nitrates » est représenté de façon schématique à la figure 2.

La mise en oeuvre d'un tel procédé de nitritation-dénitritation permet, comparativement à celle d'un procédé de nitrification-dénitrification classique tel que décrit en figure 1, de réduire d'environ 25% la consommation en oxygène et d'environ 40% la consommation en réactifs carbonés. Elle permet ainsi d'abattre de manière satisfaisante la pollution azotée d'une eau de manière plus économique.

Il est également connu dans l'état de la technique un autre procédé biologique dit de « nitritation-déammonification ». Celui-ci permet de réduire encore davantage le coût inhérent au traitement de la pollution azotée d'une eau.

Un tel procédé consiste à introduire une eau à traiter dans un réacteur biologique séquentiel à l'intérieur duquel sont mises en oeuvre des phases aérées et des phases anoxies en minimisant la formation de nitrates par des conditions opérationnelles sélectives et en mettant en oeuvre une biomasse spécifique dite biomasse « anammox ».

Au cours des phases aérées, la mise en oeuvre des mêmes conditions opérationnelles que celles décrites précédemment pour le procédé « shunt des nitrates » permet de sélectionner des bactéries AOB au détriment des bactéries NOB et de minimiser la production de nitrates à partir des nitrites par la biomasse NOB.

Au cours des phases anoxies, des bactéries de type anammox se développent et agissent sur les ions ammonium et sur les nitrites pour former du diazote ($N_2$) gazeux ainsi qu'une petite quantité de nitrates sans consommer de carbone organique puisqu'il s'agit de bactéries autotrophes, à la différence de la biomasse hétérotrophe responsable de l'étape de dénitritation dans le procédé « shunt des nitrates ».

Lorsque l'étape de dénitritation, consistant en la dégradation des nitrites sous forme de diazote ($N_2$) gazeux, implique des bactéries de type anammox, cette étape dite de dénitritation est plus précisément nommée déammonification.

La mise en oeuvre d'un tel procédé de « nitritation-déammonification » permet, comparativement à celle d'un procédé de « nitrification-dénitrification » classique, de réduire d'environ 60% la consommation en oxygène et d'environ 90% la consommation en réactifs carbonés. Elle permet ainsi d'abattre de manière satisfaisante la pollution azotée d'une eau de manière encore plus économique.

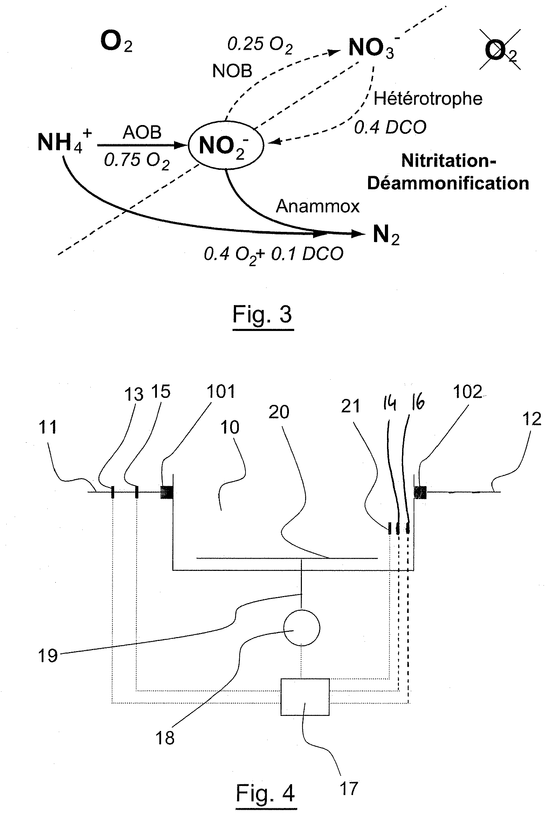

Ce procédé d'abattement de la pollution azotée par «nitritation-déammonification » est représenté de façon schématique à la figure 3.

Les procédés de type « shunt des nitrates » ou « nitritation-déammonification » peuvent être mis en oeuvre de manière continue ou séquencée.

Au cours de la mise en oeuvre des procédés de type « nitrification-dénitrification », « shunt des nitrates » ou « nitritation-déammonification », les étapes de nitrification et de dénitrification ou les étapes de nitritation et de dénitritation / déammonification peuvent être mises en oeuvre de manière simultanée avec ou sans support de biomasse. Dans ce cas, l'aération du réacteur peut être continue.

La présente invention concerne les procédés de traitement biologique par nitritation-dénitritation comprenant au moins une étape aérée, et tout particulièrement ces deux derniers procédés de traitement d'eau par nitritation-dénitritation de types « shunt des nitrates » et « nitritation-déammonification » qui ont pour avantage de permettre d'abattre l'ammonium contenu dans une eau tout en limitant la consommation d'oxygène et de substrat carboné comparativement aux procédés de traitement d'eau par nitrification-dénitrification classiques.

En pratique, il s'est révélé être assez difficile de prévenir la formation de nitrates lors de la mise en oeuvre de procédés de ces types alors que celle-ci vise précisément à éviter leur formation. En effet, dans des conditions classiques de mise en oeuvre, les nitrites produits par les bactéries AOB à partir de l'ammonium sont directement oxydés par les bactéries NOB pour former des nitrates.

Des techniques de régulation ont par conséquent été développées de manière à mieux maîtriser le déroulement des différentes réactions impliquées lors de la mise en oeuvre des procédés de ce type, et en particulier à éviter la formation des nitrates.

Ainsi, pour favoriser l'activité des bactéries AOB au détriment des bactéries NOB et limiter ainsi la formation de nitrates, il est connu d'agir sur différents paramètres :

- la température au sein du réacteur : au-delà d'une température d'environ 25 à 28°C, la vitesse de prolifération des bactéries AOB est supérieure à celle des bactéries NOB ;
- la concentration en ammonium dans le réacteur : au-delà d'une certaine concentration en ammonium, l'activité des bactéries NOB est inhibée ;
- la concentration en oxygène dissous : une faible concentration en oxygène dissous limite l'activité des bactéries NOB au profit des bactéries AOB ;

- le temps de séjour des boues dans le réacteur.

La prise en compte d'au moins un de ces paramètres peut permettre d'abattre de manière efficace la teneur en pollution azotée de l'eau tout en limitant la formation de nitrates et en améliorant la maîtrise de la consommation en oxygène et le cas échéant en réactifs carbonés.

WO2010/074008A enseigne de réguler l'aération d'un procédé de type Anammox en mesurant les concentrations en NO3-, en NO2- et en NH4+ à l'intérieur du réacteur et en comparant ces concentrations à des valeurs seuil prédéterminées.

## 3. Inconvénients de l'art antérieur

Bien que la prise en compte d'au moins un de ces paramètres permette d'améliorer la mise en oeuvre des procédés de traitement biologique comprenant au moins une étape aérée, comme les procédés de type nitrification-dénitrification, « shunt des nitrates » et « nitritation -déammonification », elle ne permet pas d'optimiser l'aération du réacteur.

En effet, lors de la mise en oeuvre des procédés de ce type, l'aération consiste à injecter dans le réacteur de l'oxygène de manière permanente ou intermittente selon une consigne de débit ou de concentration fixe. La quantité d'oxygène injectée dans le réacteur sur une période donnée est donc fixe.

Toutefois, la concentration en ammonium de l'eau à traiter ainsi que l'activité biologique à l'intérieur du réacteur varient au cours du temps. Par conséquent, les besoins en oxygène dissous dans le réacteur fluctuent dans le temps.

Il existe alors des périodes au cours desquelles la quantité d'oxygène dissous dans le réacteur est trop importante (sur-aération) en sorte que des nitrates sont formés parfois en grande quantité. Les gains en termes de réduction de la consommation en oxygène et de prévention de la formation des nitrates escomptés par la mise en oeuvre de procédés de ce type sont alors réduits. Il existe également des périodes au cours desquelles la quantité d'oxygène dissous dans le réacteur est insuffisante (sous-aération). L'efficacité du procédé en termes d'abattement de la concentration en ammonium est alors limitée.

Les techniques de régulation selon l'art antérieur ne permettent donc pas d'optimiser de manière dynamique l'apport en oxygène dans un réacteur biologique au sein duquel est mis en oeuvre un procédé de traitement d'eau par nitritation-dénitritation comprenant au moins une étape aérée de façon à adapter l'aération du réacteur aux besoins et à limiter en conséquence la consommation en oxygène et la formation de nitrates.

## 4. Objectifs de l'invention

L'invention a notamment pour objectif de pallier ces inconvénients de l'art antérieur.

Plus précisément, un objectif de l'invention est d'améliorer, dans au moins un mode de réalisation, les performances des procédés de traitement d'eau de type biologique comprenant au moins une étape aérée de nitritation.

En particulier, un objectif de l'invention est de mettre en oeuvre, dans au moins un mode de réalisation, une telle technique qui permette de réduire la quantité de nitrates formés au cours de sa mise en oeuvre.

L'invention vise également à procurer, dans au moins un mode de réalisation, une telle technique qui permette de mieux maîtriser l'aération du réacteur au sein duquel elle est mise en oeuvre.

Notamment, l'invention vise à procurer, dans au moins un mode de réalisation, une telle technique qui permette d'adapter de manière dynamique l'aération du réacteur de façon à l'adapter aux besoins. L'invention poursuit encore l'objectif de fournir, dans au moins un mode de réalisation, une telle technique qui soit plus économique à mettre en oeuvre que les techniques de l'art antérieur.

## 5. Exposé de l'invention

Ces objectifs, ainsi que d'autres qui apparaîtront par la suite, sont atteints à l'aide d'un procédé de traitement d'une eau chargée en azote sous forme d'ammonium au sein d'un réacteur biologique par nitritation-dénitritation, ledit procédé comprenant au moins :

- une étape (i) d'alimentation en ladite eau dudit réacteur biologique;
- une étape (ii) aérée au cours de laquelle de l'oxygène est injectée dans le réacteur ;
- une étape (iii) d'extraction d'une eau traitée dudit réacteur.

Selon l'invention, un tel procédé comprend en outre :

- une étape de détermination d'une information représentative de la quantité de nitrates formés dans ledit réacteur ;

- une étape de détermination d'une information représentative de la quantité d'ammonium abattu dans ledit réacteur ;
- une étape de calcul du rapport entre ladite information représentative de la quantité de nitrates formés dans ledit réacteur et ladite information représentative de la quantité d'ammonium abattu dans ledit réacteur ;
- une étape consistant à déterminer le pourcentage d'ammonium abattu dans ledit réacteur ;

lesdites étapes de détermination étant mises en oeuvre de manière continue ou intermittente selon une fréquence prédéterminée,

l'apport en oxygène dans ledit réacteur au cours de ladite étape (ii) aérée étant déterminée en fonction dudit rapport entre ladite information représentative de la quantité de nitrates formés dans ledit réacteur et ladite information représentative de la quantité d'ammonium abattu dans ledit réacteur et en fonction dudit pourcentage d'ammonium abattu dans ledit réacteur.

Ainsi, l'invention repose sur une approche tout à fait originale qui consiste à réguler l'apport en oxygène au sein d'un réacteur biologique dans lequel est mis en oeuvre un procédé de traitement d'eau de type biologique par nitritation-dénitritation comprenant au moins une étape aérée en fonction du pourcentage d'ammonium abattu dans le réacteur d'une part et en fonction du rapport entre la quantité de nitrates formés dans le réacteur et la quantité d'ammonium abattu dans le réacteur d'autre part.

Les inventeurs ont en effet remarqué que lorsque le rapport entre la quantité de nitrates formés dans le réacteur et la quantité d'ammonium abattu dans le réacteur augmente, ce qui signifie que la production de nitrates augmente et/ou que l'abattement de l'ammonium diminue, les conditions dans le réacteur sont telles qu'elles favorisent le développement des bactéries NOB au détriment des bactéries AOB. Il est alors possible d'agir sur la quantité d'oxygène injectée dans le réacteur de façon à promouvoir le développement des bactéries AOB au détriment des bactéries NOB dans le but de favoriser l'abattement de l'ammonium et de limiter la production de nitrates.

Les inventeurs ont toutefois remarqué qu'il pouvait y avoir des situations pendant lesquelles l'abattement de l'ammonium devient trop faible en sorte que l'efficacité du procédé en termes d'abattement de l'ammonium se dégrade.

La prise en compte combinée et du pourcentage d'ammonium abattu dans le réacteur d'une part et du rapport entre la quantité de nitrates formés dans le réacteur et la quantité d'ammonium abattu dans le réacteur d'autre part permet, selon l'invention, d'adapter de manière dynamique l'apport en oxygène dans le réacteur de façon à limiter la production de nitrates tout en maintenant un abattement suffisant de l'ammonium garantissant l'efficacité du procédé.

La mise en oeuvre de la technique selon l'invention permet donc d'améliorer les performances d'un traitement d'eau de type biologique comprenant au moins une étape aérée tant en termes d'abattement de l'ammonium qu'en termes de consommation en oxygène.

La technique selon l'invention, qui constitue un procédé visant à abattre la teneur en ammonium d'une eau, conduit donc à améliorer l'efficacité d'un traitement d'eau de type biologique comprenant au moins une étape aérée tout en limitant le coût de sa mise en oeuvre.

Au sens de l'invention, l'apport en oxygène déterminé au cours de la mise en oeuvre d'un tel procédé pourra par exemple être exprimé en débit d'oxygène injecté dans le réacteur ou correspondre à une consigne de concentration en oxygène dissous dans le réacteur délivrée avec des moyens d'aération connus en soit de l'homme du métier.

Un procédé selon l'invention peut être mis en oeuvre de manière continue. Dans ce cas, l'eau à traiter est introduite en continu dans le réacteur et l'eau traitée en est extraite en continu.

Un procédé selon l'invention peut également être mis en oeuvre de manière séquencée. Dans ce cas, de l'eau à traiter est introduite dans le réacteur. Une fois l'alimentation du réacteur achevée, l'eau qu'il contient est traitée biologiquement. Une fois le traitement biologique achevé, l'eau traitée est extraite du réacteur. Dans une variante, l'eau à traiter pourra être introduite dans le réacteur par fractions successives, une nouvelle alimentation du réacteur étant mise en oeuvre après que la portion précédemment introduite dans le réacteur y a été traitée. Dans ce cas, l'eau traitée sera extraite du réacteur après que le niveau haut de celui-ci aura été atteint et que l'ensemble du volume d'eau qu'il contient aura été traité.

La technique selon l'invention pourra être mise en oeuvre de manière combinée avec d'autres méthodes de pression sélective visant à promouvoir l'activité des bactéries nitritantes (AOB) comme la température au sein du réacteur, l'âge des boues, la concentration en $NH_3$ dissous dans le réacteur ou toute combinaison de ces trois facteurs.

L'étape aérée est une phase au cours de laquelle des nitrites sont formés. En d'autres termes, il s'agit d'une étape de nitritation au cours de laquelle on tend à limiter voir à éliminer la formation de nitrates par la gestion de l'aération selon l'invention. Un procédé selon l'invention peut donc généralement comprendre au moins une étape anoxie de dénitritation. Au sens de l'invention, la dénitritation est une étape au cours de laquelle des nitrites sont dégradés en diazote gazeux. Cette dégradation peut impliquer des bactéries de type hétérotrophes et/ou de type anammox. Lorsque l'étape de dénitritation implique des bactéries de type anammox, celle-ci est plus précisément nommée « déammonification ».

Les étapes de nitritation et de dénitritation pourront être mises en oeuvre alternativement. Il existe alors des phases d'aération et des phases de non aération du réacteur. Les étapes de nitritation et de dénitritation pourront également être mises en oeuvre simultanément. Dans ce cas, l'aération du réacteur peut être continue. Dans le cas d'une déammonification, des supports placés dans un réacteur de type MBBR (pour « Moving-Bed Biofilm Reactor » en langue anglaise) pourront servir au développement de la biomasse sous forme de biofilm permettant l'aération continue du réacteur. D'autres techniques pourront être mises en oeuvre pour permettre à la biomasse de se développer sous la forme d'un biofilm de telle sorte que le réacteur puisse être aéré en continu. Au rang de ces techniques figurent notamment les techniques d'auto-agrégation de la biomasse sous forme de granules qui ne nécessite pas la mise en oeuvre de support de biomasse.

Les étapes de détermination d'une information représentative de la quantité de nitrates formés et de la quantité d'ammonium abattu sont mises en oeuvre tout au long du procédé, de manière continue ou intermittente selon une fréquence prédéterminée, aussi bien dans le cadre d'un fonctionnement en mode continu qu'en mode séquencé.

Selon une caractéristique avantageuse, un procédé selon l'invention comprend une étape de détermination d'une variation de consigne d'apport en oxygène en fonction dudit rapport entre ladite information représentative de la quantité de nitrates formés dans ledit réacteur et ladite information représentative de la quantité d'ammonium abattu dans ledit réacteur et en fonction dudit pourcentage d'ammonium abattu dans ledit réacteur, et une étape de détermination d'une nouvelle consigne d'apport en oxygène correspondant à la somme d'une consigne courante d'apport en oxygène dans ledit réacteur et de ladite variation de consigne d'apport en oxygène.

Cette mise en oeuvre permet de tenir compte de l'inertie des processus biologiques impliqués au cours de la mise en oeuvre du procédé et de lisser la consigne d'aération à partir de la consigne courante pour éviter des changements trop brutaux d'aération.

Dans ce cas, un procédé selon l'invention comprend une étape de détermination d'une première contribution à ladite variation de consigne d'apport en oxygène dudit rapport entre ladite information représentative de la quantité de nitrates formés dans ledit réacteur et ladite information représentative de la quantité d'ammonium abattu dans ledit réacteur, et une étape de détermination d'une deuxième contribution à ladite variation de consigne d'apport en oxygène dudit pourcentage d'ammonium abattu dans ledit réacteur, ladite variation de consigne d'apport en oxygène étant fonction desdites première et deuxième contributions.

Cette mise en oeuvre permet de délivrer une consigne d'aération précise qui permette de limiter la consommation en oxygène et la production de nitrites tout en garantissant un bon niveau d'élimination de l'ammonium.

Un procédé selon l'invention comprend de manière préférentielle une étape de suivi de l'évolution dans le temps de la valeur dudit rapport entre ladite information représentative de la quantité de nitrates formés dans ledit réacteur et ladite information représentative de la quantité d'ammonium abattu dans ledit réacteur, la quantité d'oxygène injecté dans ledit réacteur au cours de ladite étape (ii) aérée étant diminuée lorsque la valeur dudit ratio augmente.

Le fait de diminuer la quantité d'oxygène injectée dans le réacteur lorsque le rapport entre la quantité de nitrates formés dans le réacteur et la quantité d'ammonium abattu dans le réacteur augmente permet de promouvoir le développement des bactéries AOB au détriment des bactéries NOB et par conséquent de limiter la production de nitrates.

Dans ce cas, un procédé selon l'invention comprend préférentiellement une étape de comparaison de la valeur dudit pourcentage d'ammonium abattu dans ledit réacteur à une valeur seuil, la quantité d'oxygène injecté dans ledit réacteur au cours de ladite étape (ii) aérée étant augmenté lorsque la valeur dudit pourcentage est inférieure à ladite valeur seuil.

Le fait d'injecter d'avantage d'oxygène dans le réacteur lorsque le pourcentage d'ammonium qui y est abattu atteint un seuil minimal prédéterminé permet de promouvoir le développement des bactéries AOB de façon à garantir un abattement convenable de l'ammonium.

Selon une caractéristique avantageuse de l'invention, ladite étape de détermination d'une information représentative de la quantité de nitrates formés dans ledit réacteur comprend une étape de mesure de la concentration en nitrates de ladite eau et de ladite eau traitée dans ledit réacteur, ou une étape de mesure de la concentration en nitrates de ladite eau en amont dudit réacteur et une étape de mesure de la concentration en nitrates de l'eau traitée dans ou en aval dudit réacteur..

Il est ainsi possible de déterminer de manière simple et précise la quantité de nitrates formés dans le réacteur à chaque instant à partir des données ainsi mesurées.

Selon une autre caractéristique avantageuse de l'invention, ladite étape de détermination d'une information représentative de la quantité d'ammonium abattu dans ledit réacteur comprend une étape de mesure de la concentration en ammonium de ladite eau et de ladite eau traitée dans ledit réacteur, ou une étape de mesure de la concentration en ammonium de ladite eau en amont dudit réacteur et une étape de mesure de la concentration en ammonium de ladite eau traitée dans ou en aval dudit réacteur.

Il est ainsi possible de déterminer de manière simple et précise la quantité d'ammonium abattue dans le réacteur à chaque instant à partir des données ainsi mesurées.

Selon une caractéristique préférentielle de l'invention, lesdites étapes de mesure de concentration en nitrates et/ou en ammonium sont réalisées en ligne et en continu.

La quantité d'oxygène injectée dans le réacteur peut donc être modifiée de manière dynamique, c'est-à-dire en temps réel, en fonction des besoins.

Selon une autre caractéristique préférentielle de l'invention, l'apport en oxygène dans ledit réacteur est déterminé selon un intervalle de temps prédéterminé.

Le temps séparant la délivrance de deux consignes d'aération successives pourra ainsi être choisi de manière telle qu'il ne soit :

- ni trop court, auquel cas, une nouvelle consigne d'aération pourrait être délivrée alors que les processus biologiques impliqués au cours de la mise en oeuvre du procédé ne sont pas à l'équilibre ;
- ni trop long, auquel cas, une nouvelle consigne d'aération pourrait être délivrée alors que les conditions ayant conduits à sa détermination ont évoluées.

La présente invention concerne également une installation de traitement d'eau comprenant :

- un réacteur biologique présentant une entrée d'eau à traiter et une sortie d'eau traitée ;
- des moyens de mesure d'une information représentative de la concentration en ammonium placés dans ledit réacteur, ou en amont de ladite entrée et en aval de ladite sortie ou dans ledit réacteur ;
- des moyens de mesure d'une information représentative de la concentration en nitrates placés dans ledit réacteur, ou en amont de ladite entrée et en aval de ladite sortie ou dans ledit réacteur ;
- des moyens de calcul d'un abattement en ammonium d'une eau circulant dans ledit réacteur à partir d'au moins certaines desdites informations ;
- des moyens de calcul d'une quantité de nitrates formée dans ladite eau circulant dans ledit réacteur à partir d'au moins certaines desdites informations ;
- des moyens de calcul du ratio entre ladite quantité de nitrates formés et ladite quantité d'ammonium abattu ;
- des moyens de calcul d'un pourcentage d'abattement d'ammonium dans l'eau circulant dans ledit réacteur à partir d'au moins certaines desdites informations ;
- des moyens d'injection d'oxygène dans ledit réacteur ;
- des moyens de détermination de la quantité d'oxygène injectée dans ledit réacteur via lesdits moyens d'injection à partir dudit ratio et dudit pourcentage d'abattement.

Lorsque le réacteur biologique est destiné à être mis en oeuvre en mode séquencé, les moyens de mesure d'une information représentative de la concentration en nitrates et de la concentration en ammonium seront avantageusement placés dans le réacteur. Lorsque le réacteur biologique est destiné à être mis en oeuvre en mode continu, les moyens de mesure d'une information représentative de la concentration en nitrates seront avantageusement placés en amont de l'entrée du réacteur et en aval de la sortie du réacteur ou dans ledit réacteur, et les moyens de mesure d'une information représentative de la concentration en ammonium seront avantageusement placés en amont de l'entrée du réacteur et en aval de la sortie du réacteur ou dans ledit réacteur.

## 6. Liste des figures

D'autres caractéristiques et avantages de l'invention apparaîtront plus clairement à la lecture de la description suivante de modes de réalisation préférentiel, donnés à titre de simples exemples illustratifs et non limitatifs, et des dessins annexés, parmi lesquels :

- la figure 1 est un schéma relatif à un procédé d'abattement de la pollution azotée par nitrification-dénitrification selon l'art antérieur ;
- la figure 2 est un schéma relatif à un procédé d'abattement de la pollution azotée par nitritation-denitritation «shunt des nitrates» selon l'art antérieur ;
- la figure 3 est un schéma relatif à un procédé d'abattement de la pollution azotée par nitritation-déammonification selon l'art antérieur ;
- la figure 4 illustre le schéma d'un exemple d'installation de traitement d'eau selon l'invention ;
- la figure 5 illustre une vue en coupe du quart d'un support de biomasse pouvant être utilisés au cours de la mise en oeuvre d'un procédé selon l'invention fonctionnant en «nitritation-déammonification» en mode continu ;
- la figure 6 illustre l'évolution de la consigne d'apport en oxygène dissous déterminée au cours d'essais par la mise en oeuvre de la technique selon l'invention.

**7. Description de modes de réalisation de l'invention**

**7.1. Rappel du principe de l'invention**

Le principe général de l'invention repose sur le fait de réguler l'apport en oxygène au sein d'un réacteur biologique dans lequel est mis en oeuvre un procédé de traitement d'eau comprenant au moins une étape aérée en fonction du pourcentage d'ammonium abattu dans le réacteur d'une part et en fonction du rapport entre la quantité de nitrates formés dans le réacteur et la quantité d'ammonium abattu dans le réacteur d'autre part.

La prise en compte combinée du rapport entre la quantité de nitrates formés dans le réacteur et la quantité d'ammonium abattu dans le réacteur et du pourcentage d'ammonium abattu dans le réacteur permet, selon l'invention, d'adapter aux besoins de manière dynamique la quantité d'oxygène injectée dans le réacteur afin de limiter la production de nitrates tout en maintenant un abattement suffisant de l'ammonium garantissant l'efficacité du procédé.

**7.2 Exemple de modes de réalisation d'installations de traitement d'eau selon l'invention**

**7.2.1. Installation destinée à fonctionner en mode « nitritation-déammonification » en continu**

On présente, en relation avec la figure 4, un mode de réalisation d'une installation de traitement d'eau selon l'invention.

Ainsi que cela est représenté sur cette figure 4, une telle installation comprend un réacteur biologique 10. Ce réacteur biologique 10 comprend une entrée d'eau à traiter 101 et une sortie d'eau traitée 102. Dans ce mode de réalisation, le réacteur contient des supports 50 sur lesquels de la biomasse peut se développer. Le réacteur 10 est donc de type MBBR.

Ces supports sont préférentiellement réalisés en plastique.

Dans des variantes, aucun supports ne pourront être placés dans le réacteur 10. Dans certains cas, la biomasse pourra alors par exemple s'auto agréger sous forme de flocs voir des granules. Elle pourra encore se présenter sous forme de boue activée classique.

Une canalisation d'eau à traiter 11 débouche à l'entrée 101 du réacteur biologique 10.

Une canalisation d'eau traitée 12 est reliée à la sortie 102 dudit réacteur biologique 10.

Des moyens de mesure d'une information représentative de la concentration en ammonium de l'eau à traiter 13 sont placés sur la canalisation 11. Des moyens de mesure d'une information représentative de la concentration en ammonium de l'eau traitée 14 sont placés dans le réacteur 10. Dans ce mode de réalisation, ces moyens de mesure 13, 14 comprennent des capteurs de mesure de concentration. Dans des variantes, d'autres moyens équivalents pourront être mis en oeuvre.

Des moyens de mesure d'une information représentative de la concentration en nitrates de l'eau à traiter 15 sont placés sur la canalisation 11. Des moyens de mesure d'une information représentative de la concentration en nitrates de l'eau traitée 16 sont placés dans le réacteur 10. Dans ce mode de réalisation, ces moyens de mesure 15, 16 comprennent des capteurs de mesure de concentration. Dans des variantes, d'autres moyens équivalents pourront être mis en oeuvre.

L'installation comprend en outre des moyens de mesure de la concentration en oxygène dissous dans le réacteur 10, qui dans ce mode de réalisation comprennent un capteur d'oxygène dissous 21.

Les moyens de mesures 13, 14, 15, 16 et 21 sont reliés à un boîtier de régulation 17.

Le boîtier de régulation 17 comprend des moyens de calcul :

- d'un abattement en ammonium par soustraction de l'information délivrée par le capteur d'ammonium placé en amont du réacteur 10 représentative de la concentration de l'eau à traiter en ammonium et de l'information délivrée par le capteur d'ammonium placé dans le réacteur 10 représentative de la concentration en ammonium de l'eau traitée ;
- d'une quantité de nitrates formée par soustraction de l'information délivrée par le capteur de nitrates placé dans le réacteur 10 représentative de la concentration de l'eau traitée en nitrates et de l'information délivrée par le capteur de nitrates placé en amont du réacteur 10 représentative de la concentration de l'eau à traiter en nitrates ;
- du ratio entre ladite quantité de nitrates formée et l'abattement en ammonium ;
- d'un pourcentage d'abattement d'ammonium par soustraction de l'information délivrée par le capteur d'ammonium placé en amont du réacteur 10 et de l'information délivrée par le capteur d'ammonium placé en dans le réacteur 10, et division du résultat obtenu par l'information délivrée par le capteur d'ammonium placé en amont du réacteur 10.

À partir du ratio et de l'abattement d'ammonium, le boîtier de régulation 17 détermine une consigne de quantité d'oxygène à injecter dans le réacteur 10. Cette consigne pourra être une consigne de débit d'injection d'oxygène ou de concentration d'oxygène dissous dans le réacteur 10. Comme il sera expliqué plus en détails par la suite, dans ce mode de réalisation, le boîtier de régulation 17 fonctionne selon une technologie de régulation de type linéaire. Dans des variantes, il pourra fonctionner selon une technologie de type logique-floue ou selon toute autre technologie de régulation capable de prendre en compte l'évolution de deux paramètres.

Le boîtier de régulation 17 est relié à des moyens d'injection d'oxygène qui comprennent, dans de mode de réalisation, un surpresseur 18.

Le surpresseur 18 est relié au moyen d'une canalisation 19 à des moyens de diffusion d'air qui dans ce mode de réalisation comprennent une rampe de diffusion 20 de fines bulles.

### 7.2.2. Installation destinée à fonctionner en mode séquentiel

Une installation de traitement d'eau destinée à fonctionner en mode séquentiel est identique à celle destinée à fonctionner en mode continu à ceci prêt que :

- les moyens de mesures 13 et 15 placés en amont de l'entrée 101 du réacteur 10 et les moyens de mesures 14 et 16 placés dans le réacteur 10 sont remplacés par des moyens de mesure de la concentration en ammonium et des moyens de mesure de la concentration en nitrates placés dans le réacteur 10 ;
- le réacteur biologique 10 est de type SBR (pour Sequencing Batch Reactor en langue anglaise) et ne contient pas de support pour la biomasse.

### 7.3 Exemple de modes de réalisation de procédés de traitement d'eau selon l'invention

#### 7.3.1 Fonctionnement en mode continu

#### A/ Principe général

Un procédé de traitement d'eau par nitritation-dénitritation selon l'invention de type « nitritation-déammonification » fonctionnant en mode continu va à présent être décrit.

Un tel procédé comprend :

- une étape (i) d'alimentation en eau du réacteur biologique 10 ;
- une étape (ii) aérée de nitritation ;
- une étape (ii') anoxie de dénitritation ;
- une étape (iii) d'extraction d'une eau traitée dudit réacteur.

L'étape (i) d'alimentation consiste à introduire de manière continue de l'eau à traiter circulant dans la canalisation 11 dans le réacteur 10 par l'entrée 101.

De l'oxygène est injectée en continu, mais de manière variable, dans le réacteur 10 via le surpresseur 18, la canalisation 19 et la rampe 20.

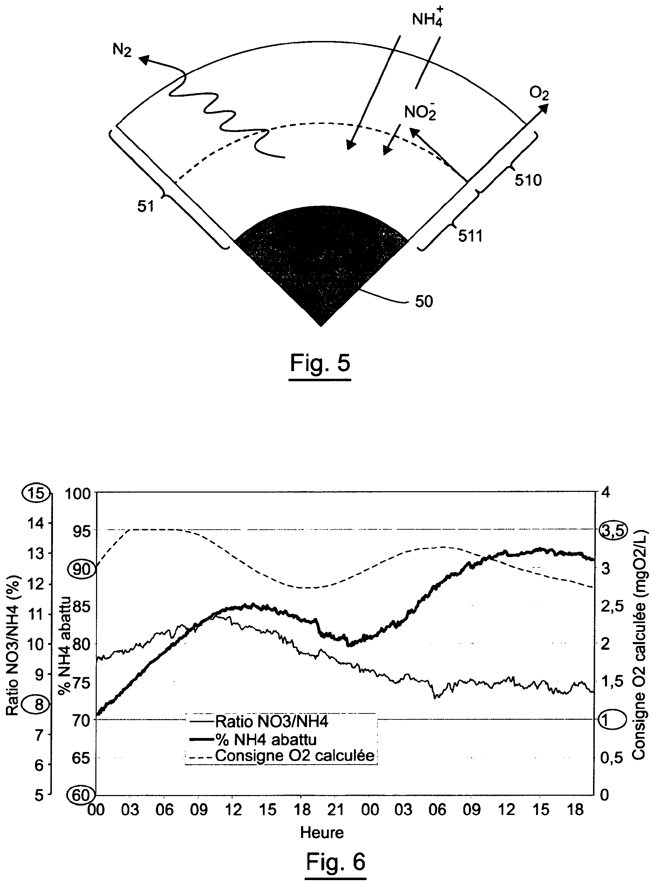

Ainsi que cela apparaît sur la figure 5, de la biomasse se développe sur les supports 50 et forme un biofilm 51 à leur surface. Cette biomasse comprend des bactéries aérobies 510 (AOB et NOB), et des bactéries anaérobies anammox 511.

Compte tenu du gradient d'oxygène à l'intérieur du biofilm 51, une activité des bactéries AOB est alors observée dans les couches supérieures de celui-ci : une étape (ii) aérée de nitritation est ainsi mise en oeuvre.

Au cours de l'étape (ii) aérée de nitritation, les bactéries AOB agissent sur les ions ammonium présents dans l'eau contenue dans le réacteur biologique 10 pour former des nitrites en consommant de l'oxygène.

Une très faible activité des bactéries NOB peut également être observée dans les couches supérieures du biofilm 51. Celles-ci peuvent agir sur les nitrites formés par les bactéries AOB pour former des nitrates en consommant de l'oxygène.

Dans ce mode de réalisation, le procédé comprend une étape (ii') anoxie de dénitritation. Cette étape de dénitritation a lieu simultanément à l'étape de nitritation.

L'étape (ii') anoxie de dénitritation met en oeuvre des bactéries anammox pour dégrader les nitrites en diazote gazeux lors de phases anoxie de dénitritation.

Lorsque le procédé est de type « nitritation-déammonification », les bactéries anammox qui se sont développées dans les couches inférieures du biofilm 51 agissent, au cours de l'étape (ii') anoxie de dénitritation, sur l'ammonium et sur les nitrites présents dans l'eau pour former du diazote gazeux.

L'eau traitée est extraite en continu du réacteur 10 via la sortie 102 et la canalisation 12.

Au cours de la mise en oeuvre du procédé, les concentrations en ammonium de l'eau en amont et dans le réacteur ainsi que les concentrations en nitrates de l'eau en amont et dans le réacteur sont mesurées en ligne et en continu au moyen des capteurs 13, 14, 15 et 16 et du boîtier de régulation 17. On connaîtra alors la valeur des mesures à chaque instant tout au long du procédé. Dans une variante, ces concentrations pourront être mesurées de manière intermittente selon une fréquence prédéterminée. On connaîtra alors la valeur des mesures à une fréquence de temps choisie tout au long du procédé. Elles pourront également ne pas être mesurées en ligne mais après prélèvement d'échantillons. Dans ce cas, des échantillons seront prélevés au moyen d'un système de prélèvement automatique d'échantillons (préleveur automatique), en continu ou en discontinu à une fréquence d'échantillonnage adaptée. Les échantillons prélevés seront analysés sur le site de production en continu ou de manière intermittente à une fréquence d'analyse prédéterminée adaptée. On connaîtra alors la valeur des mesures à une fréquence de temps choisie tout au long du procédé.

Le boîtier de régulation 17 calcule alors en temps réel :

- la quantité de nitrates formés dans le réacteur ($Q_{NO3\ Formés}$) en soustrayant à la concentration en nitrates de l'eau traitée dans le réacteur ($Q_{NO3\ In}$) celle de l'eau à traiter en amont du réacteur ($Q_{NO3\ Entrée}$) ;
- la quantité d'ammonium abattue dans le réacteur ($Q_{NH4\ Abattus}$) en soustrayant à la concentration en ammonium de l'eau à traiter en amont du réacteur ($Q_{NH4\ Enrée}$) celle de l'eau traitée dans le réacteur ($Q_{NH4\ In}$) ;
- le ratio entre la quantité de nitrates formés ($Q_{NO3\ Formés}$) et la quantité d'ammonium abattus ($Q_{NH4\ Abattus}$) selon la formule :

$$\text{Ratio} = (Q_{NO3\ Formés}) / (Q_{NH4\ Abattus})$$

- le pourcentage d'ammonium abattu dans ledit réacteur selon la formule :

$$\%NH_{4\ abattus} = (Q_{NH4\ Abattus}) / (Q_{NH4\ Entrée})$$

Le régulateur 17 détermine ensuite :

- la contribution à la variation de consigne d'apport en oxygène du Ratio, c'est-à-dire quelle devrait être la variation de consigne d'apport en oxygène compte tenu de la valeur du Ratio ;
- la contribution à la variation de consigne d'apport en oxygène du $\%NH_{4\ abattus}$, c'est-à-dire quelle devrait être la variation de consigne d'apport en oxygène compte tenu de la valeur du $\%NH_{4\ abattus}$.

Une variation de consigne d'apport en oxygène $\Delta O_2$ est ensuite déterminée en effectuant la somme de ces deux contributions. Cette variation peut être positive ou négative.

Une nouvelle consigne d'apport en oxygène est calculée en ajoutant la variation de consigne d'apport en oxygène $\Delta O_2$ à la consigne courante d'apport en oxygène dans le réacteur.

Le calcul de la consigne d'apport en oxygène est réalisé en temps réel. Dans des variantes, il pourra être réalisé selon un intervalle de temps prédéterminé.

**B/ Exemple détaillé**

Un procédé selon l'invention de type « nitritation-déammonification » a été mis en oeuvre de manière continu au sein d'une installation comprenant un réacteur 10 de type MBBR.

Le volume de ce réacteur 10 était égal à deux mètres cubes. Il contenait un volume d'un mètre cube de supports en matière plastique permettant à de la biomasse de se développer sous forme de biofilm.

Le réacteur 10 était alimenté en continu avec un effluent chargé en ammonium (700 à 900 mgN-NH$_4$/L) provenant du surnageant de digesteurs anaérobies de boues d'épuration.

Lors de la mise en oeuvre d'un tel procédé, l'opérateur en charge du traitement de l'eau a fixé au préalable, en fonction des contraintes d'exploitation :

- le pourcentage minimal admissible d'abattement en ammonium ;
- le pourcentage cible d'abattement en ammonium ;
- la valeur cible du Ratio ;
- la valeur maximale admissible sur la valeur du Ratio ;
- l'intervalle de variation de la consigne en O$_2$ dissous ;
- le coefficient de mise à l'échelle de la variation de consigne en O$_2$ dissous ;

- la période de calcul, c'est-à-dire la durée séparant chaque nouveau calcul de consigne d'aération.

Dans cet exemple, les valeurs suivantes ont été déterminées :

- le pourcentage minimal admissible d'abattement en ammonium : 60%
- le pourcentage cible d'abattement en ammonium : 90%
- la valeur cible du Ratio : 8%
- la valeur maximale admissible sur la valeur du Ratio : 15%
- l'intervalle de variation de la consigne en $O_2$ dissous : entre 1.0 et 3.5 $mgO_2$dissous/L
- le coefficient de mise à l'échelle de la variation de consigne en $O_2$ dissous : 0,2
- la période de calcul : 5 minutes

L'opérateur a ensuite fixé quelle devait être les contributions maximales du Ratio et du %$NH_{4\ abattus}$ sur la variation de consigne en oxygène dissous :

- pour un Ratio supérieur ou égal au Ratio maximum qui dans cet exemple est égal à 15%, la contribution de ce paramètre sur la variation de consigne était fixée à -1 alors que pour un Ratio inférieur ou égal au Ratio cible qui dans cet exemple était égal à 8%, la contribution de ce paramètre sur la variation de consigne était fixée à 0. Pour un Ratio compris entre 15% et 8%, la contribution sur la variation de consigne était comprise entre -1 et 0 de façon linéaire.
- pour un %$NH_{4\ abattus}$ inférieur ou égal au %$NH_{4\ abattus}$ minimal qui dans cet exemple est égal à 60%, la contribution de ce paramètre sur la variation de consigne était fixée à +1 alors que pour un %$NH_{4\ abattus}$ supérieur ou égal au %$NH_{4\ abattus}$ cible qui dans cet exemple est égal à 90%, la contribution de ce paramètre sur la variation de consigne était fixée à 0. Pour un %$NH_{4\ abattus}$ compris entre 60% et 90%, la contribution sur la variation de consigne était comprise entre +1 et 0 de façon linéaire.

La mise en oeuvre des moyens de mesure 13, 14, 15, 16 et 21 a conduit à déterminer à un moment donné les valeurs suivantes :

- $Q_{NH4\ Entrée}$ = 600 mgN/L
- $Q_{NH4\ Sortie}$ = 120 mgN/L
- $Q_{NO3\ Entrée}$ = 0 mgN/L
- $Q_{NO3\ Sortie}$ = 45 mgN/L
- $Q_{O2}$ = 2,5 $mgO_2$/L

À partir de ces valeurs, le régulateur 17 a déterminé les valeurs suivantes :

- Ratio = 9,4%
- %$NH4_{\ abattus}$ = 80%

Le régulateur 17 a ensuite déterminé à partir des valeurs de Ratio et de %$NH4_{\ abattus}$ les contributions respectives de ces grandeurs sur la variation de consigne d'oxygène dissous.

Un %$NH4_{\ abattus}$ de 80% correspond à une contribution sur la variation de consigne d'oxygène dissous de +0,33 et un Ratio de 9,4% correspond à une contribution sur la variation de consigne de -0,2.

La variation de consigne d'oxygène dissous est égale à la somme de la contribution de chacun des facteurs pris en compte (soit ici +0,13) multiplié par un coefficient de mise à l'échelle (ici 0,2) soit dans cet exemple +0,026 $mgO_2$/L.

La nouvelle consigne d'oxygène dissous, qui est égale à la somme de la consigne courante (ici 2,5 $mgO_2$/L) et de la variation de consigne (ici calculée à +0,026 $mgO_2$/L) est alors calculée par le régulateur et est égale à 2,526 $mgO_2$/L.

**C/ Essais**

La Figure 6 présente les résultats obtenus lors de la mise en oeuvre de l'invention décrite dans l'exemple détaillé ci-dessus pendant 48h. Pour rappel, la valeur cible du Ratio était 8% et celle du %$NH_4$ abattus était 90%. La valeur maximale admissible du Ratio était 15% et la valeur minimale du %$NH_4$ abattus était 60%. La consigne en $O_2$ dissous calculée par le régulateur pouvait varier entre 1.0 et 3.5 $mgO_2$/L.

Dans un premier temps (de t = 0 à t = 9h), la contribution du %NH4 abattus sur la variation de la consigne est supérieure à la contribution du Ratio. Par conséquent, la variation de consigne en $O_2$ dissous est positive ce qui implique que la consigne en $O_2$ dissous calculée par le régulateur augmente, jusqu'à atteindre la valeur maximale fixée par l'opérateur, ici 3.5 $mgO_2$/L.

Dans un second temps (de t = 9h à t = 18h), la contribution du Ratio sur la variation de consigne est supérieure à la contribution du %$NH_4$ abattu. Par conséquent, la variation de consigne en $O_2$ dissous est négative ce qui implique que la consigne en $O_2$ dissous calculée par le régulateur diminue.

Dans un troisième temps (de t = 18h à t = 6h, deuxième jour), la contribution du Ratio devient moins importante que la contribution du %NH4 abattu, ce qui implique que la variation de consigne en $O_2$ dissous s'annule puis redevient positive. Par conséquent, la consigne en $O_2$ dissous calculée par le régulateur se stabilise jusqu'à environ 2.7 $mgO_2$/L puis augmente de nouveau.

Enfin, dans un quatrième temps (à partir de t = 9h le deuxième jour) la contribution du %$NH_4$ abattu devient nulle dans la mesure où le pourcentage a dépassé la valeur cible fixée par l'opérateur, dans ce cas 90%. Par conséquent la variation de consigne en $O_2$ dissous dépend uniquement de la contribution du Ratio. Le Ratio est légèrement supérieur à la valeur cible, ici 8%, donc la variation de consigne en $O_2$ dissous est négative, ce qui implique que la consigne en $O_2$ dissous calculée par le régulateur diminue progressivement.

### 7.3.2 Fonctionnement en mode séquentiel

Un procédé de traitement d'eau par nitritation-dénitritation selon l'invention fonctionnant en en mode séquentiel va à présent être décrit.

Un tel procédé comprend :

- une étape (i) d'alimentation en eau du réacteur biologique 10 ;
- une étape (ii) aérée de nitritation ;
- une étape (ii') anoxie de dénitritation ;
- une étape (iii) d'extraction d'une eau traitée dudit réacteur.

L'étape (i) d'alimentation consiste à introduire de l'eau à traiter circulant dans la canalisation 11 dans le réacteur 10 par l'entrée 101 jusqu'à remplir le réacteur 10.

De l'oxygène est injectée dans le réacteur 10 via le surpresseur 18, la canalisation 19 et la rampe 20.

Une activité des bactéries AOB est alors observée à l'intérieur du réacteur biologique séquentiel 10 au cours de l'étape (ii) aérée de nitritation.

Au cours de l'étape (ii) aérée de nitritation, les bactéries AOB agissent sur les ions ammonium présents dans l'eau contenue dans le réacteur biologique séquentiel 10 pour former des nitrites en consommant de l'oxygène.

L'étape (ii) aérée de nitritation est suivie d'une étape (ii') anoxie de dénitritation.

L'étape (ii') anoxie de dénitritation peut indifféremment mettre en oeuvre soit des bactéries hétérotrophes soit des bactéries Anammox pour dégrader les nitrites en diazote gazeux lors de phases anoxie de dénitritation. Dans le premier cas, il s'agira d'un procédé de type « shunt des nitrates ». Dans le second, il s'agira d'un procédé de type « nitritation-déammonification ».

Lorsque le procédé est de type « shunt des nitrates », les bactéries hétérotrophes agissent, au cours de l'étape (ii') anoxie de dénitritation, sur les nitrites présents dans l'eau contenue dans le réacteur biologique séquentiel 10 pour former du diazote gazeux en consommant le substrat carboné présent dans le réacteur biologique séquentiel 10. L'étape (ii') anoxie de dénitritation peut comprendre une étape d'apport en carbone dans le réacteur biologique séquentiel 10.

Lorsque le procédé est de type « nitritation-déammonification », les bactéries anammox agissent, au cours de l'étape (ii') anoxie de dénitritation, sur l'ammonium et sur les nitrites présents dans l'eau pour former du diazote gazeux.

Dès que l'ensemble du volume d'eau contenu dans le réacteur 10 est traité, l'agitation au sein du réacteur 10 est arrêtée en sorte que l'eau qu'il contient subit une décantation.

L'eau traitée, séparée des boues activées, est ensuite extraite du réacteur via la sortie 102 et la canalisation 12.

Dans ce mode de réalisation, le réacteur est rempli intégralement au cours de l'étape (i) d'alimentation et l'ensemble de son volume total est traité au cours de la mise en oeuvre du procédé. Dans une variante, le volume total d'eau à traiter pourra être traité par portions successives. Dans ce cas, une portion de volume d'eau à traiter sera introduite dans le réacteur au cours d'une première étape d'alimentation. Cette portion d'eau subira alors une nitritation puis une dénitritation. De nouvelles étapes d'alimentation, de nitritation aérée puis de dénitritation anoxie seront mises en oeuvre de façon à traiter progressivement le volume total d'eau à traiter susceptible d'être contenu dans le réacteur. L'eau traitée subira ensuite une décantation avant d'être extraite du réacteur.

Au cours de la mise en oeuvre du procédé, les concentrations en ammonium et en nitrates de l'eau présente dans le réacteur sont mesurées en ligne et en continu au moyen des capteurs prévus à cet effet et du boîtier de régulation 17. On connaîtra alors la valeur des mesures à chaque instant tout au long du procédé. Dans une variante, ces concentrations pourront être mesurées de manière intermittente selon une fréquence prédéterminée. On connaîtra alors la valeur des mesures à une fréquence de temps choisie tout au long du procédé. Elles pourront également ne pas être mesurées en ligne mais après prélèvement d'échantillons. Dans ce cas, des échantillons seront prélevés au moyen d'un système de prélèvement automatique d'échantillons (préleveur automatique), en continu ou en discontinu à une fréquence d'échantillonnage adaptée. Les échantillons prélevés seront analysés sur le site de production en continu ou de manière intermittente à une fréquence d'analyse prédéterminée adaptée. On connaîtra alors la valeur des mesures à une fréquence de temps choisie tout au long du procédé.

Les concentrations mesurées à la fin de chaque étape d'alimentation permettent d'obtenir une image de la composition de l'eau à traiter dans le réacteur. Les concentrations mesurées ultérieurement pendant le traitement biologique permettent d'obtenir une image de la composition de l'eau traitée, plus précisément de l'eau en cours de traitement dans ledit réacteur.

Le boîtier de régulation calcule alors en temps réel :

- la quantité de nitrates formés dans le réacteur ($Q_{NO3\ Formés}$) lors de l'étape (ii) de nitritation aérée en soustrayant la concentration en nitrates de l'eau traitée mesurée pendant l'étape aérée ($Q_{NO3\ EauTraitée}$) à celle de l'eau à traiter mesurée à la fin de l'étape (i) d'alimentation ($Q_{NO3\ EauATraiter}$);
- la quantité d'ammonium abattue dans le réacteur ($Q_{NH4\ Abattus}$) lors de l'étape (ii) de nitritation aérée en soustrayant la concentration en ammonium de l'eau à traiter mesurée à la fin de l'étape (i) d'alimentation ($Q_{NH4\ EauATraiter}$) à celle de l'eau traitée mesurée pendant l'étape aérée ($Q_{NH4\ EauTraitée}$) ;
- le ratio entre la quantité de nitrates formés ($Q_{NO3\ Formés}$) et la quantité d'ammonium abattu ($Q_{NH4\ Abattus}$) selon la formule :

$$Ratio = (Q_{NO3\ Formés}) / (Q_{NH4\ Abattus})$$

- le pourcentage d'ammonium abattu dans ledit réacteur selon la formule :

$$\%NH_{4\ abattus} = (Q_{NH4\ Abattus}) / (Q_{NH4\ EauATraiter})$$

Le régulateur 17 détermine ensuite :

- la contribution à la variation de consigne d'apport en oxygène du Ratio, c'est-à-dire quelle devrait être la variation de consigne en apport d'oxygène compte tenu de la valeur du Ratio ;
- la contribution à la variation de consigne d'apport en oxygène du $\%NH_{4\ abattus}$, c'est-à-dire quelle devrait être la variation de consigne en apport d'oxygène compte tenu de la valeur du $\%NH_{4\ abattus}$.

Une variation de consigne d'apport en oxygène $\Delta O_2$ est ensuite déterminée en effectuant la somme de ces deux contributions. Cette variation peut être positive ou négative.

Une nouvelle consigne d'apport en oxygène est calculée en ajoutant variation de consigne d'apport en oxygène $\Delta O_2$ à la consigne courante d'apport en oxygène dans le réacteur.

Le calcul de la consigne d'apport en oxygène est réalisé en temps réel. Dans des variantes, il pourra être réalisé selon un intervalle de temps prédéterminé.

Le mode de détermination de la consigne d'apport en oxygène n'est pas détaillé ici. Il peut être similaire à celui décrit dans le cadre d'un procédé de traitement fonctionnant en continu.

Quel que soit le mode de réalisation mis en oeuvre, la consigne d'aération délivrée par le régulateur pourra être bornée de façon à éviter que sa valeur soit aberrante. Cette consigne pourra avoir une borne maximale et/ou une borne minimale.

## Revendications

**1.** Procédé de traitement d'une eau chargée en azote sous forme d'ammonium au sein d'un réacteur biologique (10) par nitritation-dénitritation, ledit procédé comprenant au moins :

- une étape (i) d'alimentation en ladite eau dudit réacteur biologique (10) ;
- une étape (ii) aérée au cours de laquelle de l'oxygène est injectée dans le réacteur (10) ;
- une étape (ii) d'extraction d'une eau traitée dudit réacteur ;

**caractérisé en ce qu'**il comprend :

- une étape de détermination d'une information représentative de la quantité de nitrates formés dans ledit réacteur ;
- une étape de détermination d'une information représentative de la quantité d'ammonium abattu dans ledit réacteur ;
- une étape de calcul du rapport entre ladite information représentative de la quantité de nitrates formés dans ledit réacteur et ladite information représentative de la quantité d'ammonium abattu dans ledit réacteur ;
- une étape consistant à déterminer le pourcentage d'ammonium abattu dans ledit réacteur ;

lesdites étapes de détermination étant mises en oeuvre de manière continue ou intermittente selon une fréquence prédéterminée,
l'apport en oxygène dans ledit réacteur au cours de ladite étape (ii) aérée étant déterminé en fonction dudit rapport entre ladite information représentative de la quantité de nitrates formés dans ledit réacteur et ladite information représentative de la quantité d'ammonium abattu dans ledit réacteur et en fonction dudit pourcentage d'ammonium abattu dans ledit réacteur.

2. Procédé selon la revendication 1, **caractérisé en ce qu'**il comprend une étape de détermination d'une variation de consigne d'apport en oxygène en fonction dudit rapport entre ladite information représentative de la quantité de nitrates formés dans ledit réacteur et ladite information représentative de la quantité d'ammonium abattu dans ledit réacteur et en fonction dudit pourcentage d'ammonium abattu dans ledit réacteur, et une étape de détermination d'une nouvelle consigne d'apport en oxygène correspondant à la somme d'une consigne courante d'apport en oxygène dans ledit réacteur et de ladite variation de consigne d'apport en oxygène.

3. Procédé selon la revendication 2, **caractérisé en ce qu'**il comprend une étape de détermination d'une première contribution à ladite variation de consigne d'apport en oxygène dudit rapport entre ladite information représentative de la quantité de nitrates formés dans ledit réacteur et ladite information représentative de la quantité d'ammonium abattu dans ledit réacteur, et une étape de détermination d'une deuxième contribution à ladite variation de consigne d'apport en oxygène dudit pourcentage d'ammonium abattu dans ledit réacteur, ladite variation de consigne d'apport en oxygène étant fonction desdites première et deuxième contributions.

4. Procédé selon l'une quelconque des revendications 1 à 3, **caractérisé en ce qu'**il comprend une étape de suivi de l'évolution dans le temps de la valeur dudit rapport entre ladite information représentative de la quantité de nitrates formés dans ledit réacteur et ladite information représentative de la quantité d'ammonium abattu dans ledit réacteur, la quantité d'oxygène injecté dans ledit réacteur au cours de ladite étape (ii) aérée étant diminuée lorsque la valeur dudit ratio augmente.

5. Procédé selon la revendication 4, **caractérisé en ce qu'**il comprend une étape de comparaison de la valeur dudit pourcentage d'ammonium abattu dans ledit réacteur à une valeur seuil, la quantité d'oxygène injecté dans ledit réacteur au cours de ladite étape (ii) aérée étant augmenté lorsque la valeur dudit pourcentage est inférieure à ladite valeur seuil.

6. Procédé selon l'une quelconque des revendications 1 à 5, **caractérisé en ce que** ladite étape de détermination d'une information représentative de la quantité de nitrates formés dans ledit réacteur comprend une étape de mesure de la concentration en nitrates de ladite eau et de ladite eau traitée dans ledit réacteur, ou une étape de mesure de la concentration en nitrates de ladite eau en amont dudit réacteur et une étape de mesure de la concentration en nitrates de l'eau traitée dans ou en aval dudit réacteur.

7. Procédé selon l'une quelconque des revendications 1 à 6, **caractérisé en ce que** ladite étape de détermination d'une information représentative de la quantité d'ammonium abattu dans ledit réacteur comprend une étape de mesure de la concentration en ammonium de ladite eau et de ladite eau traitée dans ledit réacteur, ou une étape de mesure de la concentration en ammonium de ladite eau en amont dudit réacteur et une étape de mesure de la concentration en ammonium de ladite eau traitée dans ou en aval dudit réacteur.

8. Procédé de traitement selon l'une quelconque des revendications 6 ou 7, **caractérisé en ce que** lesdites étapes de mesure de concentration en nitrates et/ou en ammonium sont réalisées en ligne et en continu.

9. Procédé selon l'une quelconque des revendications 1 à 8, **caractérisé en ce que** l'apport en d'oxygène dans ledit réacteur est déterminé selon un intervalle de temps prédéterminé.

**10.** Installation de traitement d'eau par la mise en oeuvre d'un procédé selon l'une quelconque des revendications 1 à 9, **caractérisée en ce qu'**elle comprend :

- un réacteur biologique (10) présentant une entrée d'eau à traiter (101) et une sortie d'eau traitée (102) ;
- des moyens de mesure d'une information représentative de la concentration en ammonium placés dans ledit réacteur (10), ou en amont (13) de ladite entrée (101) et en aval (14) de ladite sortie (102) ou dans ledit réacteur (10) ;
- des moyens de mesure d'une information représentative de la concentration en nitrates placés dans ledit réacteur (10), ou en amont (15) de ladite entrée (101) et en aval (16) de ladite sortie (102) ou dans ledit réacteur (10) ;
- des moyens de calcul (17) d'un abattement en ammonium d'une eau circulant dans ledit réacteur à partir d'au moins certaines desdites informations ;
- des moyens de calcul (17) d'une quantité de nitrates formée dans ladite eau circulant dans ledit réacteur à partir d'au moins certaines desdites informations ;
- des moyens de calcul (17) du ratio entre ladite quantité de nitrates formés et ladite quantité d'ammonium abattu ;
- des moyens de calcul (17) d'un pourcentage d'abattement d'ammonium de l'eau circulant dans ledit réacteur à partir d'au moins certaines desdites informations ;
- des moyens d'injection d'oxygène (18, 19, 20) dans ledit réacteur (10) ;
- des moyens de détermination (17) de l'apport en oxygène dans ledit réacteur (10) via lesdits moyens d'injection (18, 19, 20) à partir dudit ratio et dudit pourcentage d'abattement.

**Patentansprüche**

**1.** Verfahren zur Behandlung Wasser, das mit Stickstoff in Form von Ammonium belastet ist, in einem biologischen Reaktor (10) durch Nitritation-Denitritation, wobei das Verfahren mindestens umfasst:

- einen Schritt (i) der Versorgung des biologischen Reaktors (10) mit dem Wasser;
- einen Belüftungsschritt (ii), während dem Sauerstoff in den Reaktor (10) eingeleitet wird;
- einen Schritt (ii) der Entnahme von behandeltem Wasser aus dem Reaktor;

**dadurch gekennzeichnet, dass** es umfasst:

- einen Schritt der Bestimmung einer Information, die für die in dem Reaktor gebildete Nitratmenge repräsentativ ist;
- einen Schritt der Bestimmung einer Information, die für die in dem Reaktor Abnahme von Ammoniummenge repräsentativ ist;
- einen Schritt der Berechnung des Verhältnisses zwischen der Information, die für die in dem Reaktor gebildete Nitratmenge repräsentativ ist, und der Information, die für die in dem Reaktor Abnahme von Ammoniummenge repräsentativ ist;
- einen Schritt, der darin besteht, den Prozentsatz von in dem Reaktor Abnahme von Ammonium zu bestimmen;

wobei die Bestimmungsschritte kontinuierlich oder intermittierend zur einer vorbestimmten Frequenz eingesetzt werden,
wobei die Zugabe von Sauerstoff in den Reaktor während des Belüftungsschrittes (ii) in Abhängigkeit von dem Verhältnis zwischen der Information, die für die in dem Reaktor gebildete Nitratmenge repräsentativ ist, und der Information, die für die in dem Reaktor Abnahme von Ammoniummenge repräsentativ ist, und in Abhängigkeit von dem Prozentsatz von in dem Reaktor Abnahme von Ammonium bestimmt wird.

**2.** Verfahren nach Anspruch 1, **dadurch gekennzeichnet, dass** es einen Schritt der Bestimmung einer Sollwertänderung einer Zugabe von Sauerstoff in Abhängigkeit von dem Verhältnis zwischen der Information, die für die in dem Reaktor gebildete Nitratmenge repräsentativ ist, und der Information, die für die in dem Reaktor Abnahme von Ammoniummenge repräsentativ ist, und in Abhängigkeit von dem Prozentsatz von in dem Reaktor Abnahme von Ammonium und einen Schritt der Bestimmung eines neuen Sollwerts einer Zugabe von Sauerstoff entsprechend der Summe eines laufenden Sollwerts einer Zugabe von Sauerstoff in den Reaktor und der Sollwertänderung einer Zugabe von Sauerstoff umfasst.

**3.** Verfahren nach Anspruch 2, **dadurch gekennzeichnet, dass** es einen Schritt der Bestimmung eines ersten Beitrags zu der Sollwertänderung einer Zugabe von Sauerstoff in Abhängigkeit von dem Verhältnis zwischen der Information, die für die in dem Reaktor gebildete Nitratmenge repräsentativ ist, und der Information, die für die in dem Reaktor Abnahme von Ammoniummenge repräsentativ ist, und einen Schritt der Bestimmung eines zweiten Beitrags zu der Sollwertänderung einer Zugabe von Sauerstoff in Abhängigkeit von dem Prozentsatz von in dem Reaktor Abnahme von Ammonium umfasst, wobei die Sollwertänderung einer Zugabe von Sauerstoff von dem ersten und dem zweiten Beitrag abhängt.

**4.** Verfahren nach einem der Ansprüche 1 bis 3, **dadurch gekennzeichnet, dass** es einen Schritt der Verfolgung der zeitlichen Entwicklung des Werts des Verhältnisses zwischen der Information, die für die in dem Reaktor gebildete Nitratmenge repräsentativ ist, und der Information, die für die in dem Reaktor Abnahme von Ammoniummenge repräsentativ ist, umfasst, wobei die in den Reaktor während des Belüftungsschrittes (ii) eingeleitete Sauerstoffmenge verringert wird, wenn der Wert des Verhältnisses steigt.

**5.** Verfahren nach Anspruch 4, **dadurch gekennzeichnet, dass** es einen Schritt des Vergleichs des Prozentsatzes von in dem Reaktor Abnahme von Ammonium mit einem Grenzwert umfasst, wobei die in den Reaktor während des Belüftungsschrittes (ii) eingeleitete Sauerstoffmenge erhöht wird, wenn der Wert des Prozentsatzes niedriger als der Grenzwert ist.

**6.** Verfahren nach einem der Ansprüche 1 bis 5, **dadurch gekennzeichnet, dass** der Schritt der Bestimmung einer Information, die für die in dem Reaktor gebildete Nitratmenge repräsentativ ist, einen Schritt des Messens der Nitratkonzentration des Wassers und des in dem Reaktor behandelten Wassers oder einen Schritt des Messens der Nitratkonzentration des Wassers stromaufwärts zum Reaktor und einen Schritt des Messens der Nitratkonzentration des behandelten Wassers in oder stromabwärts zum Reaktor umfasst.

**7.** Verfahren nach einem der Ansprüche 1 bis 6, **dadurch gekennzeichnet, dass** der Schritt der Bestimmung einer Information, die für die in dem Reaktor Abnahme von Ammoniummenge repräsentativ ist, einen Schritt des Messens der Ammoniumkonzentration des Wassers und des in dem Reaktor behandelten Wassers oder einen Schritt des Messens der Ammoniumkonzentration des Wassers stromaufwärts zum Reaktor und einen Schritt des Messens der Ammoniumkonzentration des behandelten Wassers in oder stromabwärts zum Reaktor umfasst.

**8.** Behandlungsverfahren nach einem der Ansprüche 6 oder 7, **dadurch gekennzeichnet, dass** die Schritte des Messens einer Nitrat- und/oder Ammoniumkonzentration online und kontinuierlich erfolgen.

**9.** Verfahren nach einem der Ansprüche 1 bis 8, **dadurch gekennzeichnet, dass** die Zugabe von Sauerstoff in den Reaktor zur einem vorbestimmten Zeitintervall bestimmt wird.

**10.** Anlage zur Wasserbehandlung durch den Einsatz eines Verfahrens nach einem der Ansprüche 1 bis 9, **dadurch gekennzeichnet, dass** sie umfasst:

- einen biologischen Reaktor (10), der einen Eingang von zu behandelndem Waser (101) und einen Ausgang von behandeltem Wasser (102) aufweist;
- Mittel zum Messen einer Information, die für die Ammoniumkonzentration repräsentativ ist, die in dem Reaktor (10) oder stromaufwärts (13) zum Eingang (101) und stromabwärts (14) zum Ausgang (102) oder in dem Reaktor (10) angeordnet sind;
- Mittel zum Messen einer Information, die für die Nitratkonzentration repräsentativ ist, die in dem Reaktor (10) oder stromaufwärts (15) zum Eingang (101) und stromawärts (16) zum Ausgang (102) oder in dem Reaktor (10) angeordnet sind;
- Mittel zur Berechnung (17) eines Abnahme von Ammonium von in dem Reaktor zirkulierendem Wasser auf Basis mindestens einer der Informationen;
- Mittel zur Berechnung (17) einer in dem im Reaktor zirkulierenden Wasser gebildeten Nitratmenge auf Basis mindestens gewisser der Informationen;
- Mittel zur Berechnung (17) des Verhältnisses zwischen der gebildeten Nitratmenge und der Abnahme von Ammonium;
- Mittel zur Berechnung (17) eines Prozentsatzes von Abnahme von Ammonium des in dem Reaktor zirkulierenden Wassers auf Basis mindestens gewisser der Informationen;
- Mittel zur Einleitung von Sauerstoff (18, 19, 20) in den Reaktor (10);
- Mittel zur Bestimmung (17) der Zugabe von Sauerstoff in den Reaktor (10) über die Einleitungsmittel (18, 19, 20) auf Basis des Verhältnisses und des Prozentsatzes von Abnahme.

**Claims**

1. Process for treating water charged with nitrogen in ammonium form within a biological reactor (10) by nitritation-denitritation, said process including at least:

    - a step (i) for supplying said biological reactor (10) with said water;
    - an aerated step (ii) during which oxygen is injected into the reactor (10);
    - a step (iii) for extracting treated water from said reactor;

    **characterised in that** it includes:

    - a step for determining a piece of information representative of the quantity of nitrates formed in said reactor;
    - a step for determining a piece of information representative of the quantity of ammonium reduced in said reactor;
    - a step for computing the ratio between said piece of information representative of the quantity of nitrates formed in said reactor and said piece of information representative of the quantity of ammonium reduced in said reactor;
    - a step for determining the percentage of ammonium reduced in said reactor;

    said steps for determining being implemented continuously or intermittently according to a predetermined frequency, the intake of oxygen into said reactor during said aerated step being determined as a function of said ratio between said piece of information representative of the quantity of nitrates formed in said reactor and said piece of information representative of the quantity of ammonium reduced in said reactor and as a function of said percentage of ammonium reduced in said reactor.

2. Process according to claim 1, **characterised in that** it comprises a step for determining a variation in set value of oxygen intake as a function of said ratio between said piece of information representative of the quantity of nitrates formed in said reactor and said piece of information representative of the quantity of ammonium reduced in said reactor and as a function of said percentage of ammonium reduced in said reactor, and a step for determining a new value of oxygen intake corresponding to the sum of a current set value of oxygen intake into said reactor and said variation in set value of oxygen intake.

3. Process according to claim 2, **characterised in that** it comprises a step for determining a first contribution, to said variation in set value of oxygen intake, of said ratio between said piece of information representative of the quantity of nitrates formed in said reactor and said piece of information representative of the quantity of ammonium reduced in said reactor, and a step for determining a second contribution, to said variation in set value of oxygen intake, of said percentage of ammonium reduced in said reactor, said variation in set value of oxygen intake being a function of said first and second contributions.

4. Process as claimed in any of claims 1 to 3, **characterised in that** it includes a step for tracking the progress, over time, of the value of said ratio between said piece of information representative of the quantity of nitrates formed in said reactor and said piece of information representative of the quantity of ammonium reduced in said reactor, the quantity of oxygen injected into said reactor during said aerated step (ii) being reduced when the value of said ratio increases.

5. Process of claim 4, **characterised in that** it includes a step for comparing the value of said percentage of ammonium reduced in said reactor with a threshold value, the quantity of oxygen injected into said reactor during said aerated step (ii) being increased when the value of said percentage is lower than said threshold value.

6. Process as claimed in any of claims 1 to 5, **characterised in that** said step for determining a piece of information representative of the quantity of nitrates formed in said reactor includes a step for measuring the nitrate concentration of said water and of said treated water in said reactor, or a step for measuring the nitrate concentration of said water upstream to said reactor and a step for measuring the nitrate concentration of the treated water in or downstream from said reactor.

7. Process as claimed in any of claims 1 to 6, **characterised in that** said step for determining a piece of information representative of the quantity of ammonium reduced in said reactor includes a step for measuring the ammonium concentration of said water and of said treated water in said reactor, or a step for measuring the ammonium concentration of said water upstream to said reactor and a step for measuring the ammonium concentration of said treated water in or downstream from said reactor.

8. Treatment process as claimed in either of claims 6 or 7, **characterised in that** said steps for measuring nitrate and/or ammonium concentration are carried out online and continuously.

9. Process as claimed in any of claims 1 to 8, **characterised in that** the oxygen intake into said reactor is determined according to a predetermined time interval.

10. Plant for treating water by implementing a process as claimed in any of claims 1 to 9, **characterised in that** it includes:

    - a biological reactor (10) having an inlet for water to be treated (101) and an outlet for treated water (102);
    - means for measuring a piece of information representative of the concentration of ammonium placed in said reactor (10), or upstream (13) to said inlet (101) and downstream (14) from said outlet (102) or in said reactor (10);
    - means for measuring a piece of information representative of the concentration of nitrates placed in said reactor (10), or upstream (15) to said inlet (101) and downstream (16) from said outlet (102) or in said reactor (10);
    - means for computing (17) a reduction in ammonium of water circulating in said reactor using at least some of said pieces of information;
    - means for computing (17) a quantity of nitrates formed in said water circulating in said reactor using at least some of said pieces of information;
    - means for computing (17) the ratio between said quantity of nitrates formed and said quantity of ammonium reduced;
    - means for computing (17) a percentage of ammonium reduction for the water circulating in said reactor using at least some of said pieces of information;
    - means of injecting oxygen (18, 19, 20) into said reactor (10);
    - means for determining (17) the intake of oxygen into said reactor (10) via said injection means (18, 19, 20) using said ratio and said percentage of reduction.

Fig. 1

Fig. 2

$$O_2 \qquad 0.25\,O_2 \longrightarrow NO_3^-$$

NOB

Hétérotrophe

0.4 DCO

$$NH_4^+ \xrightarrow[0.75\,O_2]{AOB} \quad NO_2^-$$

Nitritation-
Déammonification

Anammox

$$\longrightarrow N_2$$

0.4 $O_2$+ 0.1 DCO

<u>Fig. 3</u>

<u>Fig. 4</u>

Fig. 5

Fig. 6

**RÉFÉRENCES CITÉES DANS LA DESCRIPTION**

**Documents brevets cités dans la description**

- WO 2010074008 A